# DEMANDE DE BREVET EUROPEEN

(11) **EP 3 112 276 A1**
(43) Date de publication de la demande: **04.01.2017**
(21) Numéro de dépôt: 16176666.2
(22) Date de dépôt: 28.06.2016
(51) Int. Cl.: B65B 19/34, B65B 35/06, B65B 35/56, B65B 25/06, A22C 11/00

(54) **SYSTEME POUR METTRE DES SAUCISSES EN BARQUETTES**

(30) Priorité: 29.06.2015 FR 1556101
(71) Demandeur: Spie Ouest-Centre, 44818 Saint-Herblain Cedex (FR)
(72) Inventeur: QUEMENER, Philippe, 29250 Saint Pol de Léon (FR); LE LAY, Bruno, 35580 Goven (FR)
(74) Mandataire: Gevers & Orès

(57) **Abrégé**

L'invention concerne (100) un système pour mettre des saucisses en barquettes, comprenant un dispositif (1) pour mettre des saucisses en barquettes muni d'un premier convoyeur (2), à alvéoles, dans lequel chaque alvéole est susceptible de contenir une saucisse, caractérisé en ce qu'il comprend :
- un réceptacle (10) destiné à recevoir des saucisses en vrac ;
- une centrifugeuse (20) agencée pour recevoir les saucisses véhiculées par un deuxième convoyeur (30) reliant le réceptacle (10) à la centrifugeuse (20), cette dernière permettant, lorsqu'elle est mise en rotation, de séparer les saucisses et de les aligner dans le sens de leur longueur ;
- un troisième convoyeur (40), agencé tangentiellement à la centrifugeuse (20) et perpendiculairement au premier convoyeur (2), pour récupérer les saucisses issues de cette centrifugeuse (20) les unes après les autres, les véhiculer et les transférer dans le sens de leur longueur vers le premier convoyeur (2) du dispositif (1) pour mettre les saucisses en barquettes.

## Description

L'invention concerne un système pour mettre des saucisses en barquettes.

On a déjà proposé des dispositifs pour mettre des saucisses en barquettes.

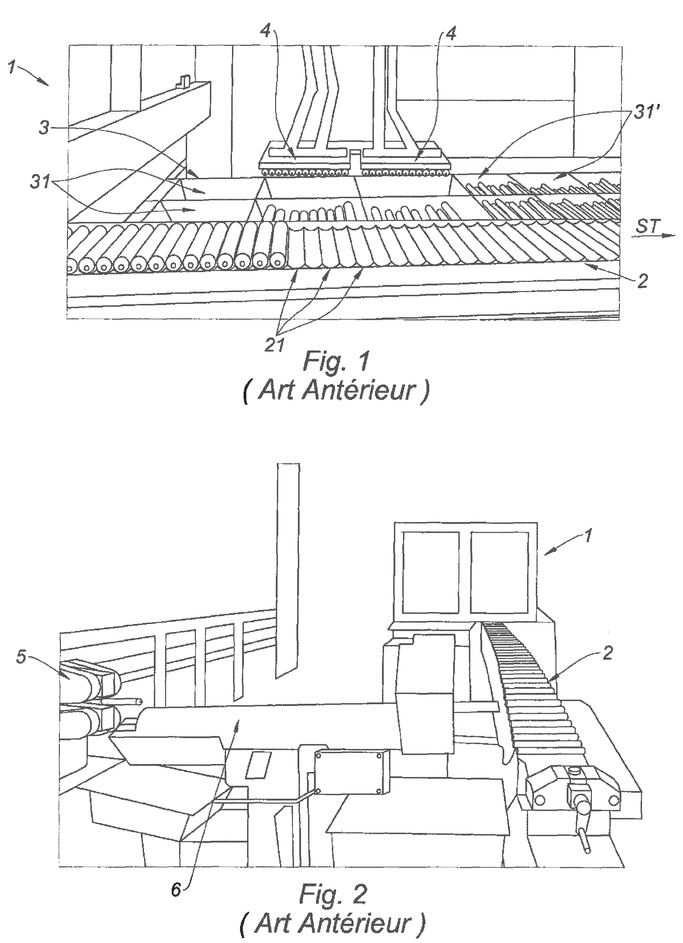

Ainsi, un dispositif 1 connu (figure 1) met en oeuvre un convoyeur 2 de saucisses comprenant des alvéoles 21, dans lequel chaque alvéole 21 présente des dimensions adaptées pour recevoir une et une seule saucisse. Les saucisses s'étendent alors dans une alvéole 21 qui est perpendiculaire au sens de translation ST du convoyeur 2.

Ce dispositif 1 comprend également un tapis roulant 3 qui véhicule des barquettes vides 31, ce tapis 3 étant disposé parallèlement au convoyeur 2 et translatant lesdites barquettes parallèlement à la direction ST de convoyage des saucisses disposées sur le convoyeur 2.

Ce dispositif 1 comprend enfin un moyen robotisé 4 apte à saisir un nombre prédéfini de saucisses depuis le convoyeur 2 et à les disposer dans l'une des barquettes vides 31 disposées sur le tapis roulant 3.

Une fois une barquette remplie, le tapis roulant 3 permet généralement d'acheminer chaque barquette 31' vers une thermo-formeuse appartenant à ce dispositif 1 (la thermo-formeuse n'est pas représentée sur les figures 1 et 2) qui permet de former un couvercle sur la barquette.

Chaque barquette peut ensuite être étiquetée.

Un inconvénient du dispositif 1 connu est qu'il nécessite d'alimenter le convoyeur 2 à alvéoles avec des saucisses.

Ceci est parfois réalisé par une opération manuelle. Un opérateur prend des saucisses disposées en vrac dans une caisse pour les disposer une à une dans une alvéole 21 du convoyeur 2.

Cela est particulièrement coûteux en main d'oeuvre et en temps.

Aussi, on met parfois en série le dispositif 1 décrit précédemment avec une unité de fabrication de saucisses (figure 2), cette unité aboutissant à un séparateur 5 qui permet, à partir de la chair à saucisses mise sous boyau, de couper le boyau à intervalles réguliers pour fabriquer chaque saucisse. Entre le séparateur 5 et le convoyeur 2 alvéoles, on prévoit généralement un autre convoyeur 6. Chaque saucisse est alors insérée automatiquement dans une alvéole 21 du convoyeur 2 et suit le parcours décrit précédemment dans le dispositif 1 de mise en barquettes des saucisses.

Dans ce cas, le remplissage de chaque alvéole 21 s'effectue automatiquement. Toutefois, la quantité de barquettes pouvant être remplies en saucisses par unité de temps est alors limitée par la vitesse de fonctionnement du séparateur.

Un objectif de l'invention est de proposer un système de mise sous barquettes de saucisses ne présentant pas l'un au moins des inconvénients précités.

A cet effet, l'invention propose un système pour mettre des saucisses en barquettes, comprenant un dispositif pour mettre des saucisses en barquettes muni d'un premier convoyeur, à alvéoles, dans lequel chaque alvéole est susceptible de contenir une saucisse, caractérisé en ce qu'il comprend :
- un réceptacle destiné à recevoir des saucisses en vrac;
- une centrifugeuse agencée pour recevoir les saucisses véhiculées par un deuxième convoyeur reliant le réceptacle à la centrifugeuse, cette dernière permettant, lorsqu'elle est mise en rotation, de séparer les saucisses et de les aligner dans le sens de leur longueur ;
- un troisième convoyeur, agencé tangentiellement à la centrifugeuse et perpendiculairement au premier convoyeur, pour récupérer les saucisses issues de cette centrifugeuse les unes après les autres, les véhiculer et les transférer dans le sens de leur longueur vers le premier convoyeur du dispositif pour mettre les saucisses en barquettes.

Le système selon l'invention pourra également comprendre l'une au moins des caractéristiques suivantes, prises seules ou en combinaison :
- le système comprend un tapis roulant pour alimenter le réceptacle avec des saucisses en vrac, ce tapis roulant étant avantageusement relié à plusieurs unités de fabrication de saucisses ;
- le réceptacle comprend un convoyeur interne apte à transférer les saucisses entre le réceptacle et le deuxième convoyeur ;
- le troisième convoyeur présente une forme en V ;
- le dispositif pour mettre des saucisses en barquettes comprend également un tapis roulant destiné à être alimenté en barquettes vides, un moyen robotisé apte à saisir un nombre prédéfini de saucisses depuis le premier convoyeur à alvéoles et à les disposer dans une barquette disposée sur le tapis roulant ;
- le système comprend un moyen disposé sur le côté du premier convoyeur et faisant face au troisième convoyeur pour maintenir les saucisses dans les alvéoles du premier convoyeur lors du transfert des saucisses entre le troisième convoyeur et le premier convoyeur ;
- le moyen pour maintenir les saucisses dans les alvéoles du premier convoyeur est formé d'une plaque, avantageusement inclinable autour d'un axe parallèle à la direction de convoyage du premier convoyeur ;
- le système comprend un moyen pour faciliter la mise en place d'une saucisse provenant du troisième convoyeur dans une alvéole du premier convoyeur ;
- le moyen pour faciliter la mise en place d'une saucisse provenant du troisième convoyeur dans une alvéole du premier convoyeur est une plaque s'étendant selon une direction parallèle à la longueur d'une alvéole ;
- le système comprend un conformateur, dont le diamètre est adapté à celui des saucisses, servant de guide aux saucisses pour assurer leur transfert entre le troisième convoyeur et le premier convoyeur, à alvéoles ,
- le système comprend un moyen pour réorganiser les saucisses dans les alvéoles du premier convoyeur ;
- le système comprend des moyens pour contrôler la vitesse de défilement du premier convoyeur, à alvéoles, en fonction de la vitesse de défilement du troisième convoyeur.

L'invention sera mieux comprise et d'autres buts, avantages et caractéristiques de celle-ci apparaîtront plus clairement à la lecture de la description qui suit et qui est faite au regard des figures annexées, sur lesqueiles :
- la figure 3 est un schéma, selon une vue de dessus, représentatif d'un système pour mettre des saucisses en barquettes conforme à l'invention;
- la figure 4 représente une vue agrandie d'une centrifugeuse appartenant au système représenté sur la figure 4, lorsque cette centrifugeuse, en rotation, comprend des saucisses ;
- la figure 5 représente une vue agrandie de l'interface entre deux convoyeurs appartenant au système représenté sur la figure 3 ;
- la figure 6 est une vue de dessus et agrandie du système pour mettre des saucisses en barquettes conforme à l'invention ;
- la figure 7 est une vue en perspective et agrandie du système pour mettre des saucisses en barquettes conforme à l'invention.

Le système 100 de mise sous barquettes selon l'invention est décrit à l'appui des figures 1 à 7.

Ce système 100 comprend un dispositif 1 pour mettre des saucisses en barquettes muni d'un convoyeur 2 à alvéoles dans lequel chaque alvéole est susceptible de contenir une saucisse.

Avantageusement, ce dispositif 1 est celui qui est décrit à l'appui des figures 1 et 2.

Un tel dispositif 1 met en oeuvre un convoyeur 2 de saucisses comprenant des alvéoles 21, dans lequel chaque alvéole 21 présente des dimensions adaptées pour recevoir une et une seule saucisse. Les saucisses s'étendent alors dans une alvéole 21 qui est perpendiculaire au sens de translation ST du convoyeur 2. Ce dispositif 1 comprend également un tapis roulant 3, qui véhicule des barquettes vides 31, ce tapis 3 étant avantageusement disposé parallèlement au convoyeur 2 et translatant lesdites barquettes parallèlement à la direction ST de convoyage des saucisses disposées sur le convoyeur 2. Ce dispositif 1 comprend également un moyen robotisé 4 apte à saisir un nombre prédéfini de saucisses depuis le convoyeur 2 et à les disposer dans l'une des barquettes vides 31 disposées sur le tapis roulant 3.

Une fois une barquette remplie, le tapis roulant 3 permet d'acheminer chaque barquette 31' vers une thermo-formeuse 7 qui permet de former un couvercle sur la barquette, cette thermo-formeuse appartenant au dispositif 1.

Chaque barquette peut ensuite être étiquetée.

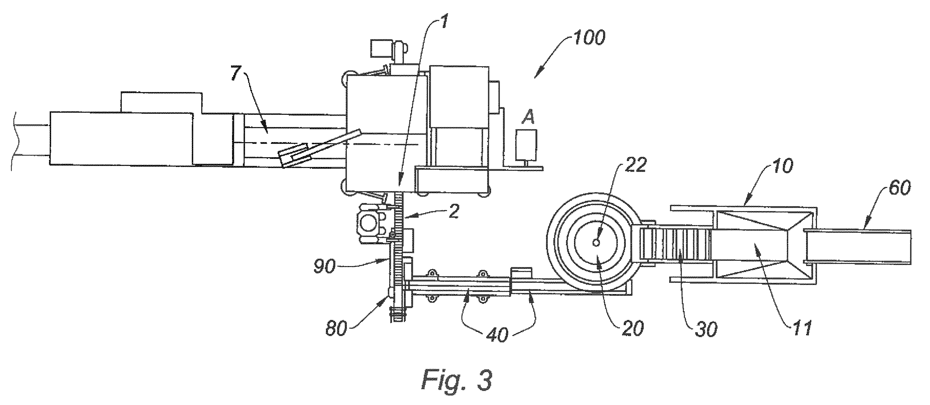

Le système 100 selon l'invention comprend également un réceptacle 10 destiné à recevoir des saucisses en vrac (figure 3).

Le système 100 selon l'invention comprend également une centrifugeuse 20 agencée pour recevoir les saucisses véhiculées par un deuxième convoyeur 30 reliant le réceptacle 10 à la centrifugeuse 20, cette dernière permettant, lorsqu'elle est mise en rotation, de séparer les saucisses et de les aligner dans le sens de leur longueur.

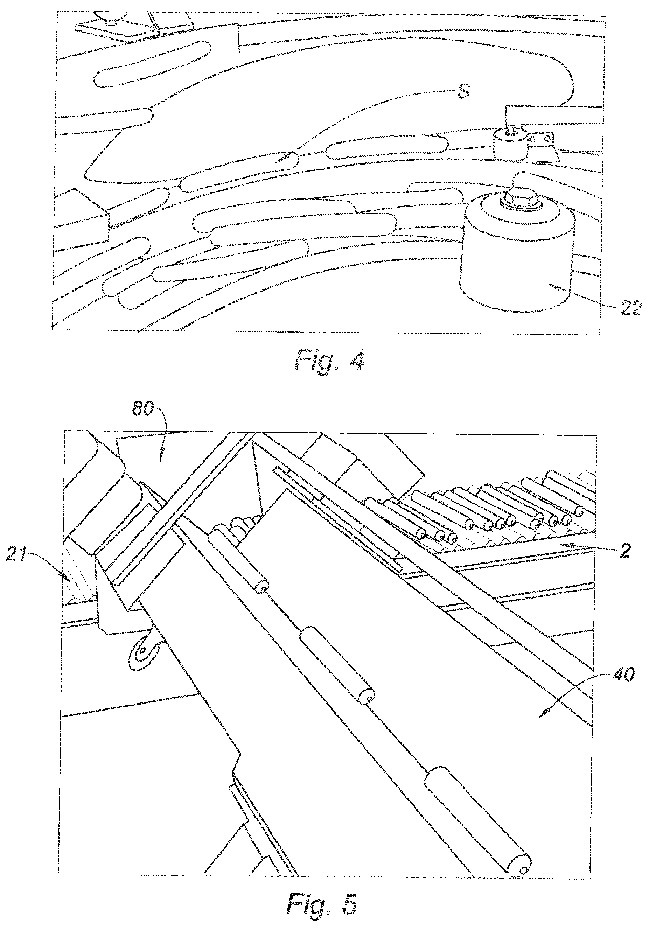

On pourra se référer aux figures 3 et 4.

En particulier, sur la figure 4, on a représenté la centrifugeuse 20 en fonctionnement, c'est-à-dire lorsqu'elle est en rotation autour de son axe vertical 22 et est alimentée en saucisses. Comme on peut le constater sur cette figure 4, les saucisses S peuvent être séparées sous l'action de la force centrifuge exercée par la centrifugeuse et alignée avec les autres saucisses.

La séparation et l'alignement des saucisses sont mis à profit an disposant un troisième convoyeur 40 agencé tangentiellement à la centrifugeuse 20. Cet agencement du troisième convoyeur 40 permet de récupérer les saucisses une par une en sortie de la centrifugeuse 20.

En effet, le système 100 selon l'invention comprend un troisième convoyeur 40, agencé tangentiellement à la centrifugeuse 20, pour véhiculer les saucisses issues de cette centrifugeuse les unes après les autres, dans le sens de leur longueur, vers le convoyeur 2 à alvéoles du dispositif 1 pour mettre les saucisses en barquettes.

Avantageusement, le troisième convoyeur 40 présentera une forme en V, cette forme permettant de bloquer chaque saucisse au fond de la forme en V.

Le troisième convoyeur 40 permet de véhiculer les saucisses, dans le sens de leur longueur, en direction du convoyeur 2 à alvéoles du dispositif 1 pour mettre les saucisses en barquettes.

Par ailleurs, le troisième convoyeur 40 est agencé perpendiculairement par rapport au convoyeur 2 à alvéoles. Ceci permet de loger directement chaque saucisse, dans une alvéole 21 du convoyeur 2.

L'automatisation du transfert entre les deux convoyeurs 40, 2 permet d'augmenter la cadence de mise sous barquettes des saucisses. Cette cadence n'est pas limitée en amont car il est toujours possible, comme cela été précisé précédemment d'alimenter la centrifugeuse 20 en conséquence.

Pour éviter que les saucisses ne s'échappent du convoyeur 2 à alvéoles lors du transfert entre les convoyeurs 40 et 2, il est avantageusement prévu un moyen 80 disposé sur le côté du convoyeur 2 à alvéoles et faisant face au troisième convoyeur 40 pour maintenir les saucisses dans les alvéoles 21 du convoyeur 2 à alvéoles.

Par exemple, ce moyen 80 peut être une plaque (cf. figure 5).

Avantageusement, cette plaque sera inclinable autour d'un axe parallèle à la direction ST de convoyage du convoyeur 2 à alvéoles.

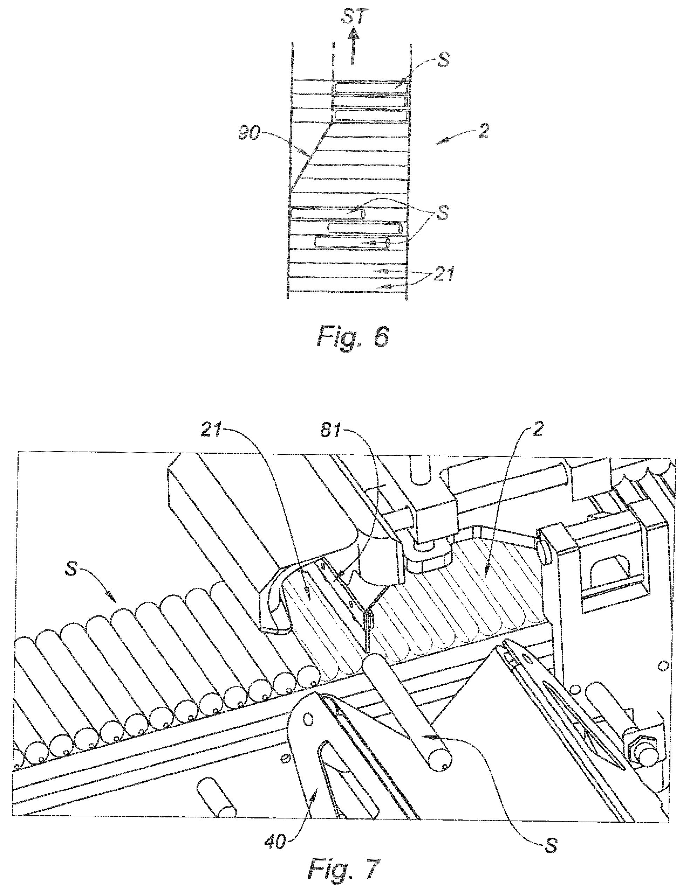

Il peut par ailleurs être prévu un moyen 81 pour faciliter la mise en place d'une saucisse S provenant du convoyeur 40 dans une alvéole 21 du convoyeur 2. Ce moyen 81 peut notamment se présenter sous la forme d'une plaque s'étendant selon une direction parallèle à la longueur d'une alvéole 21 (figure 7).

En variante aux moyens 80, 81, il est envisageable de mettre en oeuvre un conformateur, dont le diamètre est adapté à celui des saucisses, servant de guide aux saucisses pour assurer leur transfert entre les deux convoyeurs 40, 2.

Il peut arriver que les saucisses, transférées automatiquement entre le troisième convoyeur 40 et le convoyeur 2 à alvéoles ne soient pas bien centrées dans leurs alvéoles 21, sur les longueurs respectives de ces alvéoles (cf. figure 5, en haut, à droite). Pour cette raison, le système 100 conforme à l'invention pourra comprendre un moyen 90 pour réorganiser les saucisses S dans les alvéoles 21 du convoyeur 2 à alvéoles.

Ce moyen 90 peut se présenter sous la forme d'une plaque inclinée par rapport à la direction ST de convoyage du convoyeur 2 à alvéoles, comme cela est représenté sur la figure 6.

Par ailleurs, pour s'assurer que les saucisses provenant du troisième convoyeur 40 alimenteront toutes les alvéoles 21 du convoyeur 2 à alvéoles, il est avantageux de prévoir des moyens pour contrôler la vitesse de défilement du convoyeur 2 à alvéoles en fonction de la vitesse de défilement du troisième convoyeur 40. A cet effet, il est envisageable d'installer une cellule pour détecter la présence d'une saucisse, au niveau de la sortie du convoyeur 40. Cette donnée est communiquée à un moyen de calcul qui peut commander un moyen de commande de la vitesse de défilement du convoyeur 2 à alvéoles.

Le système 100 selon l'invention peut aussi comprendre un tapis roulant 60 pour alimenter le réceptacle 10 avec des saucisses en vrac. Dans ce cas, le tapis roulant 60 est avantageusement relié à plusieurs unités de fabrication de saucisses. On rend alors possible une augmentation de la cadence de mise sous barquettes, de manière automatique, c'est-à-dire sans l'intervention d'un opérateur par rapport au dispositif 1 représenté sur les figures 1 et 2.

En l'absence du tapis roulant 60, un opérateur doit amener régulièrement des caisses de saucisses en vrac qu'il introduit lui-même dans le réceptacle, saucisses qui sont récupérées depuis une ou plusieurs unités de fabrication. Dans un tel cas, un opérateur intervient mais pour autant, il est tout à fait possible d'augmenter la cadence par rapport au dispositif 1 représenté sur les figures 1 et 2. En effet, te déversement de saucisses en vrac dans le réceptacle 10 est beaucoup moins coûteux en temps que la disposition directe dans les alvéoles 21 du convoyeur 2 à alvéoles du dispositif 1 (figure 1). Par ailleurs, par rapport à la réalisation de la figure 2, on n'est pas limité par la vitesse de fonctionnement du séparateur 5,

On peut prévoir que le système 100 comprenne un convoyeur interne 11 logé dans le réceptacle 10, ce convoyeur interne 11 étant apte à transférer les saucisses entre le réceptacle 10 et le deuxième convoyeur 30.

On notera enfin que, dans certains cas, on peut avoir un intérêt à mettre en oeuvre des pulvérisateurs d'eau, au niveau de la jonction entre le convoyeur 40 et le convoyeur 2 à alvéoles. Cela permet, dans certains cas, d'améliorer ta dépose des saucisses sortant du convoyeur 40 sur le convoyeur 2.

## Revendications

1. Système (100) pour mettre des saucisses en barquettes, comprenant un dispositif (1) pour mettre des saucisses en barquettes muni d'un premier convoyeur (2), à alvéoles, dans lequel chaque alvéole est susceptible de contenir une saucisse, **caractérisé en ce qu'**il comprend :
- un réceptacle (10) destiné à recevoir des saucisses en vrac ;
- une centrifugeuse (20) agencée pour recevoir les saucisses véhiculées par un deuxième convoyeur (30) reliant le réceptacle (10) à la centrifugeuse (20), cette dernière permettant, lorsqu'elle est mise en rotation, de séparer les saucisses et de les aligner dans le sens de leur longueur ;
- un troisième convoyeur (40), agencé tangentiellement à la centrifugeuse (20) et perpendiculairement au premier convoyeur (2), pour récupérer les saucisses issues de cette centrifugeuse (20) les unes après les autres, les véhiculer et les transférer dans le sens de leur longueur vers le premier convoyeur (2) du dispositif (1) pour mettre les saucisses en barquettes.

2. Système (100) selon la revendication 1, dans lequel il est prévu un tapis roulant (60) pour alimenter le réceptacle (10) avec des saucisses en vrac, ce tapis roulant (60) étant avantageusement relié à plusieurs unités de fabrication de saucisses.

3. Système (100) selon l'une des revendications précédentes, dans lequel le réceptacle (10) comprend un convoyeur interne (11) apte à transférer les saucisses entre le réceptacle (10) et le deuxième convoyeur (30).

4. Système (100) selon l'une des revendications précédentes, dans lequel le troisième convoyeur (40) présente une forme en V.

5. Système (100) selon l'une des revendications précédentes, dans lequel le dispositif (1) pour mettre des saucisses en barquettes comprend également :
- un tapis roulant (3) destiné à être alimenté en barquettes vides (31);
- un moyen robotisé (4) apte à saisir un nombre prédéfini de saucisses depuis le premier convoyeur (2) à alvéoles et à les disposer dans une barquette disposée sur le tapis roulant (3).

6. Système (100) selon l'une des revendications précédentes, dans lequel il est prévu un moyen (80) disposé sur le côté du premier convoyeur (2) et faisant face au troisième convoyeur (40) pour maintenir les saucisses dans les alvéoles du premier convoyeur (2) lors du transfert des saucisses entre le troisième convoyeur (40) et le premier convoyeur (2).

7. Système (100) selon la revendication précédente, dans lequel le moyen (80) pour maintenir les saucisses dans les alvéoles du premier convoyeur (2) est formé d'une plaque, avantageusement inclinable autour d'un axe parallèle à la direction de convoyage du premier convoyeur (2).

8. Système (100) selon l'une des revendications précédentes, dans lequel il est prévu un moyen (81) pour faciliter la mise en place d'une saucisse provenant du troisième convoyeur (40) dans une alvéole (21) du premier convoyeur (2).

9. Système (100) selon la revendication précédente, dans lequel le moyen (81) pour faciliter la mise en place d'une saucisse provenant du troisième convoyeur (40) dans une alvéole (21) du premier convoyeur (2) est une plaque s'étendant selon une direction parallèle à la longueur d'une alvéole (21).

10. Système (100) selon l'une des revendications 1 à 5, dans lequel il est prévu un conformateur, dont le diamètre est adapté à celui des saucisses, servant de guide aux saucisses pour assurer leur transfert entre le troisième convoyeur (40) et le premier convoyeur (2), à alvéoles.

11. Système (100) selon l'une des revendications précédentes, dans lequel il est prévu un moyen (90) pour réorganiser les saucisses dans les alvéoles du premier convoyeur (2).

12. Système (100) selon l'une des revendications précédentes, dans lequel il est prévu des moyens pour contrôler la vitesse de défilement du premier convoyeur (2), à alvéoles, en fonction de la vitesse de défilement du troisième convoyeur (40).
